# EUROPÄISCHE PATENTSCHRIFT

(11) **EP 3 166 196 B1**
(45) Veröffentlichungstag und Bekanntmachung des Hinweises auf die Patenterteilung: **01.05.2019**
(21) Anmeldenummer: 16197211.2
(22) Anmeldetag: 04.11.2016
(51) Int. Cl.: H02J 3/32, H02J 3/38

(54) **KRAFTWERK, KRAFTWERKVERBUND MIT EINEM KRAFTWERK SOWIE BETRIEBSVERFAHREN**
POWER PLANT, POWER PLANT COMBINATION WITH A POWER PLANT, AND METHOD OF OPERATION
CENTRALE ÉLECTRIQUE, ENSEMBLE DE CENTRALE ÉLECTRIQUE COMPRENANT UNE CENTRALE ÉLECTRIQUE ET PROCÉDÉ DE FONCTIONNEMENT

(30) Priorität: 06.11.2015 DE 102015119186
(43) Veröffentlichungstag der Anmeldung: 10.05.2017
(73) Patentinhaber: EnBW Energie Baden-Württemberg AG, 76131 Karlsruhe (DE)
(72) Erfinder: Wauschkuhn, Arnim, 70619 Stuttgart (DE); Weberruss, Jörg, 74392 Freudental (DE); Helmenstein, Roland, 71665 Vaihingen Enz / Horrheim (DE); Kinn, Theodor, 76275 Ettlingen (DE)
(74) Vertreter: Kaufmann, Ursula Josefine

(56) Entgegenhaltungen:
- EP-A2- 2 562 411
- DE-A1-102011 055 225
- DE-A1-102012 018 031
- DE-A1-102012 113 051
- US-A1- 2010 231 045
- US-A1- 2011 215 640
- US-A1- 2012 046 798
- US-A1- 2014 365 027

## Beschreibung

Die Erfindung betrifft ein Kraftwerk zur Bereitstellung wenigstens von Regelleistung für ein Versorgungsnetz oder Leistung zur elektrischen Versorgung von Verbrauchern in einem Versorgungsnetz. Die Erfindung betrifft weiterhin einen Kraftwerkverbund mit einer Mehrzahl von Kraftwerken zur Bereitstellung wenigstens von Regelleistung für ein Versorgungsnetz oder Leistung zur elektrischen Versorgung von Verbrauchern in einem Versorgungsnetz, sowie ein Betriebsverfahren hierzu.

### Stand der Technik

Kraftwerke dienen zur großflächigen Energieversorgung von Verbrauchern mit elektrischem Strom. Üblicherweise sind Kraftwerke weiträumig vernetzt und stellen neben der Grundversorgungsleistung auch Regelleistung in Wechselspannungsnetzen bereit. Beispielsweise sind Kraftwerke im europäischen Raum in einem Kraftwerkverbund eingebunden.

Die Regelleistung eines Kraftwerks dient zur Haltung bzw. Wiederherstellung des Gleichgewichts zwischen einem physikalischem Stromangebot und der aktuellen Nachfrage nach dem Auftreten einer Differenz zwischen Nennleistung und Abnahmeleistung.

Stromnetze können keine Energie speichern. Abweichungen von der Nennleistung in Wechselspannungsnetzen resultieren daher zwangsläufig in einer Änderung der im gesamten Wechselspannungsnetz synchronen Netzfrequenz. Bei einem Überangebot von elektrischer Leistung im Wechselspannungsnetz kommt es zu einem Anstieg der Netzfrequenz über der Nennfrequenz, bei einem Unterangebot zu einem Abfall unter die Nennfrequenz.

Die Regelleistung stellt die Netzstabilität sicher, indem mit positiver Regelleistung die Netzfrequenz bei einem Unterangebot wieder auf die Nennfrequenz angehoben wird und mit negativer Regelleistung bei einem Überangebot die Netzfrequenz auf die Nennfrequenz abgesenkt wird.

Die Erbringung von Regelleistung in derartige verknüpfte Netze erfolgt in Deutschland bislang durch vorhandene Kraftwerke konventioneller, nuklearer und regenerativer Art nach Vorgaben und Regeln des europäischen Verbundnetzes (UTCE-Netz). Kraftwerke, die Regelleistung erbringen sollen, werden hierzu zuvor in einem aufwändigen Verfahren präqualifiziert.

Die Bereitstellung von Primärregelleistung soll die geforderte homogene Verteilung zur Verringerung des Ausfallsrisikos im Verbundnetz zuerst sicherstellen.

In einem Netzgebiet muss jeder Kraftwerksbetreiber, der Primärregelleistung angeboten hat, diese innerhalb von 30 Sekunden zur Verfügung stellen. Dabei beteiligt sich nicht jedes Kraftwerk an der Primärregelung, beispielsweise keine Windparks oder Photovoltaikanlagen. Es ist unerheblich, in welchem Bereich des Verbundnetzes eine Schwankung auftritt, da die momentane Netzfrequenz sich im gesamten Netzbereich aufgrund von Lastschwankungen verändert. Diese wird für den proportionalen Primärregler der an der Primärregelung teilnehmenden Kraftwerke mit der Sollfrequenz verglichen. Kommt es zu einer Abweichung, so wird Primärregelleistung in jedem beteiligten Kraftwerk, d.h. meist alle Kraftwerke über 100 MW Nennleistung, gemäß seiner Reglerkennlinie aktiviert und auf diese Weise die Frequenz gestützt (bei sprunghafter Lastzunahme) bzw. eine weitere Frequenzsteigerung (bei Lastabnahme) verhindert.

Die angebotene Primärregelleistung eines Kraftwerks muss bei jeder Frequenzabweichung von bis zu ± 200 mHz innerhalb von 30 Sekunden aktiviert und mindestens 15 Minuten abgegeben werden. Bei der Auslegung des Kraftwerks sind jedoch bereits die dynamischen und stationären Eigenschaften wie Schwachlastbetriebspunkt, Volllastbetriebspunkt, Überlastfähigkeit definiert. Das Regelband eines Kraftwerks ist daher aufgrund seiner technischen Funktionsweise dynamisch und statisch begrenzt.

Die DE 10 2011 055 225 A1 offenbart ein Verfahren zur Bereitstellung von Regelleistung für ein Stromversorgungsnetz, bei dem ein Energiespeicher an dem Stromversorgungsnetz angeschlossen ist. So wird vorgeschlagen, als Energiespeicher einen Pool von Energiespeichern einzusetzen, beispielsweise eine Vielzahl von Akkumulatoren in Elektrofahrzeugen, die bei Bedarf mit dem Kraftwerk zur Leistungsabgabe oder Leistungsaufnahme gekoppelt werden, wenn diese an einer Ladestation und damit an das Versorgungsnetz angeschlossen sind. Die Einspeisung oder Entnahme von Leistung aus dem Versorgungsnetz erfolgt demnach an vielen dezentralen Einspeisepunkten.

Die DE 10 2012 113 051 A1 offenbart ein Kraftwerk, an das ein Versorgungsnetz angeschlossen ist. Zusätzlich zu dem Kraftwerk ist ein separater Elektroenergiespeicher vorgesehen, der separat an das Versorgungsnetz angeschlossen ist. Der Energiespeicher kann wie das Kraftwerk Regelleistung in das Versorgungsnetz einspeisen, um die Netzfrequenz des Versorgungsnetzes zu stabilisieren. Ferner kann der Energiespeicher zum Stabilisieren der Netzfrequenz überschüssige Leistung aus dem Versorgungsnetz aufnehmen. Der Energiespeicher ist zur Regeneration zusätzlich auch an das Kraftwerk angeschlossen.

Die DE 10 2012 018 031 A1 beschreibt ein Windkraftwerk, das mit einer Chemieanlage mit Elektrolyseur gekoppelt ist, über den der Stromerzeuger des Windkraftwerks an die Ausgangskomponente des Kraftwerks geschaltet ist.

In der EP 2 562 411 A2 ist ein Elektroenergiespeicher mit einem Kraftwerk gekoppelt. Kraftwerk und Elektroenergiespeicher sind separat über separate Einspeisevorrichtungen an das Versorgungsnetz angeschlossen.

Die US 2014/0365027 A1 offenbart ein auf alternativen Energien, wie z.B. Windenergie und Photovoltaik, basierendes Versorgungsnetz. Lokal verteilte Energiespeicher im Netz dienen dazu, die stark schwankende Energieerzeugung zu stabilisieren.

In der US 2010/0231045 A1 wird ein Photovoltaikkraftwerk beschrieben, bei dem die Photovoltaikanlage mit einem Energiespeicher gekoppelt ist. Der Energiespeicher soll den stark schwankenden Photovoltaikstroms ausgleichen. Die Kombination von Photovoltaikanlage und Batterie soll das langsamer variierende Verhalten eines konventionellen Kraftwerks nachahmen.

Die US 2011/0215640 A1 beschreibt ebenso eine Photovoltaikanlage, deren schwankende Energieerzeugung durch stabilisierende Komponenten, beispielsweise eine Batterie, ausgeglichen werden soll.

In der US 2012/0046798 A1 ist ein System zur Energieversorgung beschrieben, bei dem bei Verbrauchern lokal verteilt Energiespeicher eingesetzt werden, die an ein Versorgungsnetz angeschlossen sind. Die Energiespeicher werden über das Versorgungsnetz geladen, wenn wenig Energie abgerufen wird. Bei Spitzenlast wird beim Verbraucher zusätzliche Energie durch die Energiespeicher bereitgestellt. Dadurch kann vermieden werden, zusätzliche Energieerzeuger im Kraftwerk einzuschalten, welches das Versorgungnetz speist.

### Offenbarung der Erfindung

Die Aufgabe der Erfindung ist die Bereitstellung eines hinsichtlich der Regelleistung und Regeldynamik verbesserten Kraftwerks.

Eine weitere Aufgabe der Erfindung ist die Bereitstellung eines hinsichtlich der Regelleistung und Regeldynamik verbesserten Kraftwerkverbunds.

Eine weitere Aufgabe der Erfindung ist die Bereitstellung eines Betriebsverfahrens eines hinsichtlich der Regelleistung und Regeldynamik verbesserten Kraftwerks oder Kraftwerkverbunds.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Erfindungsgemäß wird ein Kraftwerk zur Bereitstellung wenigstens von Regelleistung für ein Versorgungsnetz und/oder Leistung zur elektrischen Versorgung von Verbrauchern in einem Versorgungsnetz vorgeschlagen, mit einem ersten Kraftwerkteil und einem zweiten Kraftwerkteil, wobei Regelleistung und/oder Leistung an einer kraftwerkseitigen Ausgangskomponente für das Versorgungsnetz bereitgestellt ist. Der erste Kraftwerkteil umfasst einen Energieerzeugungsteil, einen Leittechnikteil sowie einen vom Leittechnikteil ansteuerbaren Stellerteil. Der Stellerteil ist vom Leittechnikteil ansteuerbar, um aus dem Energieerzeugungsteil elektrische Leistung zu gewinnen. Der zweite Kraftwerkteil ist als Elektroenergiespeicherteil ausgebildet und umfasst einen oder mehrere Elektroenergiespeicher, der zur Abgabe oder Aufnahme von Elektroenergie vorgesehen ist. Die Ausgangskomponente des Kraftwerks ist elektrisch zwischen das Versorgungsnetz und die beiden Kraftwerkteile geschaltet.

Vorteilhaft definiert der zweite Kraftwerkteil zusammen mit dem ersten Kraftwerkteil die maximale Kraftwerk-Regelleistung des Kraftwerks. Nach außen wirken die beiden Kraftwerkteile zusammen. Bezogen auf die Regelleistung bilden der zweite Kraftwerkteil und der erste Kraftwerkteil eine Einheit. Der erste Kraftwerkteil kann insbesondere ein konventionelles Kraftwerk sein, etwa ein Kohlekraftwerk, ein Wasserkraftwerk oder dergleichen.

Die beiden Kraftwerkteile sind kraftwerkseitig so miteinander gekoppelt, dass ihre Gesamtleistung kraftwerkseitig der Ausgangskomponente zugeführt wird und die Ausgangskomponente die Leistung des Kraftwerks an das Versorgungsnetz ausgibt.

Bei Bedarf an Regelleistung im Versorgungsnetz stellt der zweite Kraftwerkteil über die kraftwerkseitige Ausgangskomponente wenigstens einen Teil der benötigten Leistung über einen vorgegebenen Zeitraum bereit, während die Leistung des ersten Kraftwerkteils an die angeforderte Regelleistung angepasst wird, wobei durch die Einbindung des zweiten Kraftwerkteils (120) eine schnelle Bereitstellung von Regelleistung erfolgt.

Der erste Kraftwerkteil kann insbesondere ein oder mehrere Energieerzeugungseinheiten als technische Einheit oder technische Einheiten aufweisen. Eine Energieerzeugungseinheit wird auch als Block bezeichnet. Eine typische Erzeugungseinheit ist beispielsweise ein Kessel, eine Turbine, verbindende Rohrleitungen und Behälter.

Der Stellerteil umfasst funktionell die Stellglieder, mit denen Ventile betätigt werden, sowie die Ventile, die Massenströme von und zu dem Energieerzeugungsteil zu beeinflussen.

Der zweite Kraftwerkteil unterstützt den ersten Kraftwerkteil mit seinem Elektroenergiespeicherteil nur so lange, bis der erste Kraftwerkteil die Leistung im Rahmen seiner zulässigen Leistungsänderungsgradienten "nachgezogen" hat. Dagegen stellt der Elektroenergiespeicher seine Leistung sehr schnell zur Verfügung, gegebenenfalls unterstützt durch weitere übliche Speicher des ersten Kraftwerkteils, bis der erste Kraftwerkteil die komplette Regelleistung alleine erbringen kann. Der Leittechnikteil stellt hierfür eine entsprechend implementierte Leittechnik zur Blockführung mit Speichernutzung bereit.

Durch den Einsatz eines Elektroenergiespeichers als zweitem Kraftwerkteil in Kombination mit dem ersten Kraftwerkteil kann das Regelband des Kraftwerks insgesamt erhöht werden, ohne dass größere bauliche Maßnahmen im ersten Kraftwerkteil, wie etwa Retrofitmaßnahmen, Veränderung des Maschinensatzes etc., notwendig sind. Der Elektroenergiespeicher muss nicht unbedingt am Standort des ersten Kraftwerkteils aufgestellt sein, ist jedoch unmittelbar in die Regelung des ersten Kraftwerkteils eingebunden.

Durch die Einbindung von Elektroenergiespeichern in den Kraftwerksbetrieb gelingt die Erhöhung des Regelbandes für Kraftwerke, insbesondere konventionelle Kraftwerke, und eine Verbesserung der Regelgüte wie auch der Regeldynamik des ersten, konventionellen Kraftwerkteils. Das Kraftwerk insgesamt kann schneller eine definierte Leistung abgeben. Der Elektroenergiespeicher kann die Leistung nahezu schlagartig bereitstellen, während der erste Kraftwerkteil die Leistung parallel dazu langsamer verändern kann.

Der Elektroenergiespeicher kann den elektrischen Strom auf beliebige Art speichern, (z.B. chemisch, mechanisch, thermisch, Druck) und den Strom als Regelleistung bei Bedarf kontrolliert zeitverzögert wieder zurückspeisen. Damit kann das Gleichgewicht zwischen physikalischem Stromangebot und Nachfrage nach dem Auftreten einer Differenz zwischen Stromangebot und Nachfrage besser gehalten bzw. wiederhergestellt werden.

Grundsätzlich ist es möglich, den zweiten Kraftwerkteil auf allen, kraftwerkseitig vor der Ausgangskomponente des Kraftwerks verfügbaren Spannungsebenen des Versorgungsnetzes anzuschließen, z.B. 20 kV / 110 kV / 220 kV / 400 kV / 750 kV. Vorteilhaft ist der zweite Kraftwerkteil auf der Eigenversorgungsebene des Kraftwerks verfügbar, so dass die elektrische Eigenversorgung von dem zweiten Kraftwerkteil geliefert wird.

Der Aufstellungsort des zweiten Kraftwerkteils kann unter Berücksichtigung von Spannungshaltung und/oder Leistungshaltung im Versorgungsnetz ausgewählt werden. Spannungshaltung bedeutet, dass das Kraftwerk durch Erzeugung eines Blindleistungsanteils eine vorgegebene Spannung im Versorgungsnetz herstellt. Die Blindleistungsbereitstellung kann ebenfalls anteilig vom zweiten Kraftwerkteil unterstützt werden.

So haben alternative Energien bestimmte Auswirkungen auf die bestehenden Netze. Mittags kann die Einspeisung von Photovoltaik-Energie das lokale Netz überlasten. Nachts fehlt dagegen Energie. Hier ist ein Elektroenergiespeicher zur Netzentlastung vorteilhaft. Scheint keine Sonne, kann der Elektroenergiespeicher als zweites Kraftwerkteil durch das Kraftwerk genutzt werden. Weiterhin ist Windenergie stark fluktuierend. Lokale Elektroenergiespeicher in der Nähe von Windkraftanlagen können zur Glättung der Wind-Einspeiseleistung beitragen. Bei Windflauten können diese ebenfalls mit Kraftwerken im Sinne einer Zusammenschaltung von ersten und zweiten Kraftwerkteilen zusammengeschaltet werden.

Das Regelband des Kraftwerks ist durch die Kombination aus erstem und zweitem Kraftwerkteil nicht mehr aufgrund seiner technischen Funktionsweise in der Leistungsbereitstellung dynamisch und statisch begrenzt. Insbesondere kann bei der Präqualifizierung die verfügbare Leistung um die des zweiten Kraftwerkteils erhöht werden.

Neben der Erhöhung des Regelbandes sowohl für Primärregelleistung (PRL) als auch für Sekundärregelleistung (SRL) kann die Regelqualität des Kraftwerks und die Genauigkeit der Leistungsabgabe an das Versorgungsnetz erhöht werden. Die Primärregelleistung dient zur Primärregelung. Diese ist definiert als die im Sekundenbereich automatisch stabilisierende Wirkleistungsregelung des gesamten, synchron betriebenen Drehstromverbundnetzes. Sie entsteht aus dem Aktivbeitrag der Kraftwerke bei Änderung der Netzfrequenz und wird unterstützt durch den Passivbeitrag der von der Netzfrequenz abhängigen Lasten.

Die Sekundärregelleistung dient zur Sekundärregelung. Diese ist definiert als die gebietsbezogene Beeinflussung von zu einem Versorgungssystem gehörigen Einheiten zur Einhaltung des gewollten Energieaustauschs der jeweiligen Regelzonen mit den übrigen Verbundnetzen bei gleichzeitiger, integraler Stützung der Frequenz. In der europäischen Verbundorganisation "Union für die Koordinierung des Transportes elektrischer Energie" (UCTE) wird die Sekundärregelung durch eine Leistungs-Frequenz-Regelung durchgeführt.

Auch die Sekundärregelung hat die Aufgabe, das Gleichgewicht zwischen physikalischem Stromangebot und Stromnachfrage nach dem Auftreten einer Differenz wieder herzustellen. Im Gegensatz zur Primärregelung wird hier nur die Situation in der jeweiligen Regelzone inklusive des Stromaustausches mit anderen Regelzonen betrachtet. Dafür werden die geplanten mit den tatsächlichen Leistungsflüssen zu anderen Regelzonen verglichen und ausgeregelt. Es muss sichergestellt sein, dass die Sekundär- und Primärregelung immer in die gleiche Richtung arbeiten, was durch eine Überwachung der Netzfrequenz sichergestellt wird. Primär- und Sekundärregelung können zeitgleich starten, der sekundäre Regelvorgang sollte entsprechend den Vorgaben der UCTE nach spätestens 15 Minuten den primären Regelvorgang abgelöst haben, so dass die Primärregelung wieder zur Verfügung steht.

Die Höhe der sekundär zur Verfügung gestellten Leistung hängt zum einen von der Netzkennzahl und der Frequenzabweichung ab, zum anderen von der Differenz aus den tatsächlichen Austauschleistungen zu Nachbarnetzen und den als Fahrplan deklarierten Austauschleistungen. Der Abruf der Sekundärregelleistung erfolgt automatisiert, dazu sind die entsprechenden Erzeugungseinheiten leittechnisch mit dem Übertragungsnetzbetreiber verbunden. Erzeugereinheiten, die Sekundärregelleistung bereitstellen, müssen dabei besondere Anforderungen erfüllen. Die gesamte Regelleistung muss innerhalb von höchstens 5 Minuten erbracht werden können, die Laständerungsgeschwindigkeit muss dabei mindestens 2 % der Nennleistung pro Minute betragen. Zum Einsatz kommen dabei zum Beispiel Pumpspeicherkraftwerke oder auch konventionelle Gas-und-Dampfkraftwerke (GuD) oder Steinkohlekraftwerke.

Im ersten Kraftwerkteil kann eine ruhigere Feuerführung bei der Dampferzeugung erfolgen mit weniger Wärmespannung, stabilerem Rauchgasweg, so dass eine größtenteils rückwirkungsfreie Regelung des ersten Kraftwerkteils möglich ist. Der Betrieb des Kraftwerks kann in dynamischen Grenzbereichen stabilisiert werden.

Ein konstantes Regelband ist im kompletten Block-Leistungsregelbereich möglich. Dabei kann der erste Kraftwerkteil aus einem oder mehreren Blöcken bestehen, die zusammen mit dem Elektroenergiespeicherteil geregelt werden können.

Eine energetisch ungünstige Androsselung der Turbinenventile bei der Dampferzeugung kann ggf. vollständig vermieden werden. Vorteilhaft ist eine Fern-Koppelung mit jedem am Netz befindlichen Kraftwerk möglich.

Die nicht im Kraftwerksbetrieb verwendete Speicherkapazität kann anderweitig einsetzbar sein (z.B. für eine unterbrechungsfreie Stromversorgung (USV), zur Durchführung von Lastmanagement im Kraftwerk oder einem Kraftwerkverbund sowie für den Intraday-Handel mit Regelleistung.

Gemäß einer günstigen Ausgestaltung kann eine Kommunikationsverbindung vorgesehen sein, mit welcher der Leittechnikteil in Kommunikationsverbindung mit dem zweiten Kraftwerkteil treten kann. Dies erlaubt eine schnelle Reaktion des zweiten Kraftwerkteils. Optional ist die Möglichkeit zur Fern-Koppelung des zweiten Kraftwerkteils mit jedem anderen Kraftwerk in einem Kraftwerkverbund gegeben, um z.B. bei Revision oder anderweitigem Stillstand Leistung dort auszugleichen. Der zweite Kraftwerkteil kann zeitweise mit unterschiedlichen ersten Kraftwerkteilen zusammenwirken, wobei dann jeweils der erste und der zweite Kraftwerkteil nach außen insgesamt als Kraftwerk in Erscheinung treten.

Gemäß einer günstigen Ausgestaltung kann der zweite Kraftwerkteil räumlich benachbart zum ersten Kraftwerkteil angeordnet sein. Alternativ kann der zweite Kraftwerkteil räumlich entfernt vom ersten Kraftwerkteil angeordnet sein und kraftwerkseitig mit der Ausgangskomponente des Kraftwerks verbunden sein. Jeder der beiden Kraftwerkteile kann unabhängig vom anderen Kraftwerkteil günstig positioniert werden.

Gemäß einer günstigen Ausgestaltung kann eine Ladezustandsüberwachung zur Überwachung des wenigstens einen Elektroenergiespeichers des zweiten Kraftwerkteils vorgesehen sein. Damit kann ein Ladezustand des Elektroenergiespeichers sichergestellt werden, der jederzeit ein Laden oder Entladen entsprechend der Anforderung von Regelleistung erlaubt.

Gemäß einer günstigen Ausgestaltung kann der zweite Kraftwerkteil für eine Leistung von wenigstens 3 MW, vorzugsweise von wenigstens 4 MW, besonders bevorzugt von wenigstens 5 MW ausgelegt sein. Optional ist auch eine Auslegung bis 30 MW oder höher möglich. Die konkrete Auslegung kann nach vorhandenen Rahmenbedingungen sinnvoll gewählt werden.

Gemäß einer günstigen Ausgestaltung kann der zweite Kraftwerkteil mit wenigstens einem weiteren der Kraftwerke des Kraftwerkverbunds gekoppelt oder koppelbar sein.

Gemäß einer günstigen Ausgestaltung kann wenigstens eine Photovoltaikanlage und/oder wenigstens eine Windkraftanlage mit mindestens einem Elektroenergiespeicher vorgesehen ist, der wenigstens zeitweise mit dem ersten Kraftwerkteil des Kraftwerks koppelbar ist oder wenigstens zeitweise mit dem Kraftwerk integriert vorgesehen ist. So kann der Energiespeicherteil des zweiten Kraftwerkteils unabhängig vom Versorgungsnetz, das vom Kraftwerk versorgt wird, geladen werden.

Gemäß eines weiteren Aspekts der Erfindung wird ein Kraftwerkverbund mit einer Mehrzahl von Kraftwerken vorgeschlagen zur Bereitstellung wenigstens von Regelleistung für ein Versorgungsnetz und/oder Leistung zur elektrischen Versorgung von Verbrauchern in einem Versorgungsnetz, wobei wenigstens ein Kraftwerk vorgesehen ist mit einem ersten Kraftwerkteil und einem zweiten Kraftwerkteil, wobei eine kraftwerkseitige Ausgangskomponente des wenigstens einen Kraftwerks zwischen dem Versorgungsnetz und den beiden Kraftwerkteilen dieses Kraftwerks angeordnet ist. Wenigstens ein weiteres Kraftwerk ist wenigstens zeitweise mit dem zweiten Kraftwerkteil gekoppelt.

Der erste Kraftwerkteil umfasst einen Energieerzeugungsteil, einen Leittechnikteil sowie einen vom Leittechnikteil ansteuerbaren Stellerteil zum Gewinnen von elektrischer Leistung aus dem Energieerzeugungsteil. Der zweite Kraftwerkteil ist als Elektroenergiespeicherteil ausgebildet und umfasst einen oder mehrere Elektroenergiespeicher. Der Elektroenergiespeicher ist zur Abgabe oder Aufnahme von Elektroenergie vorgesehen, und von dem Leittechnikteil ansteuerbar. Der zweite Kraftwerkteil definiert zusammen mit dem ersten Kraftwerkteil die maximale Kraftwerk-Regelleistung dieses Kraftwerks.

Der zweite Kraftwerkteil wirkt zeitweise mit verschiedenen weiteren Kraftwerken zusammen. Bezogen auf die Regelleistung bilden der zweite Kraftwerkteil und die weiteren Kraftwerke dabei jeweils für die Zeit des Zusammenwirkens eine Einheit. Das weitere Kraftwerk kann insbesondere ein konventionelles Kraftwerk sein, etwa ein Kohlekraftwerk, ein Wasserkraftwerk, ein GuD-Kraftwerk oder dergleichen. Optional kann ein solches weiteres Kraftwerk ebenfalls einen ersten, konventionellen Kraftwerkteil und einen zweiten, mit dem ersten Kraftwerkteil zusammenwirkenden zweiten Kraftwerkteil mit einem Elektroenergiespeicherteil aufweisen.

Der Elektroenergiespeicherteil unterstützt das jeweilige weitere Kraftwerk nur so lange, bis das weitere Kraftwerk oder, gegebenenfalls, dessen erster Kraftwerkteil die Leistung im Rahmen seiner zulässigen Leistungsänderungsgradienten "nachgezogen" hat. Der Elektroenergiespeicher stellt seine Leistung sehr schnell zur Verfügung, gegebenenfalls unterstützt durch weitere übliche Speicher des jeweiligen weiteren Kraftwerks oder des jeweiligen ersten Kraftwerkteils, bis der konventionelle Kraftwerkteil die komplette Regelleistung alleine erbringen kann. Der Leittechnikteil des jeweiligen weiteren Kraftwerks oder jeweiligen ersten Kraftwerkteils stellt hierfür eine entsprechend implementierte Leittechnik zur Blockführung mit Speichernutzung bereit.

Vorteilhaft können die Kraftwerke des Kraftwerkverbunds in Kommunikationsverbindung miteinander und mit einem oder mehreren zweiten Kraftwerkteilen stehend ausgebildet sein. Eine Echtzeitdatenübertragung kann erfolgen und erlaubt eine schnelle Bereitstellung von Regelleistung.

Gemäß einer günstigen Ausgestaltung können mehrere zweite Kraftwerkteile zur zeitweisen Kopplung mit verschiedenen Kraftwerken vorgesehen sein. Insbesondere können die Kraftwerke für dasselbe Versorgungsnetz vorgesehen sein. Hierdurch kann die Redundanz im Versorgungsnetz erhöht werden.

Gemäß eines weiteren Aspekts der Erfindung wird ein Verfahren zum Betreiben eines Kraftwerks oder eines Kraftwerkverbunds mit einer Mehrzahl von Kraftwerken vorgeschlagen, welche wenigstens Regelleistung zur elektrischen Versorgung von Verbrauchern in einem Versorgungsnetz an einer kraftwerkseitigen Ausgangskomponente bereitstellen, wobei wenigstens ein Kraftwerk mit einem ersten Kraftwerkteil und einem zweiten Kraftwerkteil vorgesehen ist. Der erste Kraftwerkteil umfasst einen Energieerzeugungsteil, einen Leittechnikteil sowie einen vom Leittechnikteil ansteuerbaren Stellerteil zum Gewinnen von elektrischer Leistung aus dem Energieerzeugungsteil. Der zweite Kraftwerkteil ist als Elektroenergiespeicherteil ausgebildet und umfasst einen oder mehrere Elektroenergiespeicher zum Ausgeben oder Aufnehmen von Elektroenergie, und wenigstens zeitweise mit dem Leittechnikteil gekoppelt und von diesem angesteuert wird. Der erste und zweite Kraftwerkteil bilden bezogen auf die Regelleistung des wenigstens einen Kraftwerks eine Einheit.

Dabei stellt bei Bedarf an Regelleistung im Versorgungsnetz der zweite Kraftwerkteil über die kraftwerkseitige Ausgangskomponente wenigstens einen Teil der benötigten Leistung über einen vorgegebenen Zeitraum bereit, während die Leistung des ersten Kraftwerkteils des Kraftwerks oder des weiteren Kraftwerks im Kraftwerkverbund an die angeforderte Regelleistung angepasst wird.

Der jeweilige erste Kraftwerkteil und/oder das weitere Kraftwerk des Kraftwerkverbunds wird nur so lange vom Elektroenergiespeicherteil unterstützt, bis der erste Kraftwerkteil und/oder das weitere Kraftwerk des Kraftwerkverbunds die Leistung im Rahmen seiner zulässigen Leistungsänderungsgradienten "nachgezogen" hat. Der Elektroenergiespeicher stellt seine Leistung sehr schnell zur Verfügung, gegebenenfalls unterstützt durch weitere übliche Speicher des jeweiligen ersten Kraftwerkteils, bis der erste Kraftwerkteil und/oder das weitere Kraftwerk des Kraftwerkverbunds die komplette Regelleistung alleine erbringen kann. Der Leittechnikteil des jeweiligen ersten Kraftwerkteils und/oder das weitere Kraftwerk des Kraftwerkverbunds stellt hierfür eine entsprechend implementierte Leittechnik zur Blockführung mit Speichernutzung bereit. Hierdurch kann das Regelband und die Regelgüte des Kraftwerks oder des Kraftwerkverbunds verbessert werden.

Gemäß einer günstigen Ausgestaltung kann der Leittechnikteil korrespondierend zur gelieferten oder aufgenommenen elektrischen Leistung des zweiten Kraftwerkteils Steuerungsbefehle an Stellgrößen des ersten Kraftwerkteils und/oder des weiteren Kraftwerks des Kraftwerkverbunds ausgeben, um dessen Leistung zu erhöhen oder zu verringern. Dies kann in einer energetisch günstigen und komponentenschonenden Weise erfolgen, da der Elektroenergiespeicher praktisch sofort die notwendige Regelleistung liefern kann und der erste Kraftwerkteil erst nach und nach Regelleistung übernehmen muss, wobei entsprechend wiederum der Elektroenergiespeicher nach und nach weniger Regelleistung zu liefern braucht.

Gemäß einer günstigen Ausgestaltung kann die Leistung des zweiten Kraftwerkteils entsprechend der aktuell benötigten Regelleistung und der aktuell verfügbaren Leistung des ersten Kraftwerkteils angepasst werden.

Gemäß einer günstigen Ausgestaltung kann bei Anforderung positiver Regelleistung der zweite Kraftwerkteil Leistung an das Versorgungsnetz abgeben und bei Anforderung negativer Regelleistung der zweite Kraftwerkteil Leistung aus dem Versorgungsnetz aufnehmen. Vorteilhaft wird der Ladezustand des Elektroenergiespeichers entsprechend aufrechterhalten.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: ein Blockdiagramm eines Kraftwerks mit einem ersten und einem zweiten Kraftwerkteil nach einem Ausführungsbeispiel der Erfindung;
- Fig. 2: ein Blockdiagramm eines Kraftwerkverbunds nach einem Ausführungsbeispiel der Erfindung;
- Fig. 3: Kennlinien der Leistungsabgabe eines Kraftwerks bei Abruf von Primärregelleistung mit einem Elektroenergiespeicher, mit Turbinenregelung und mit Brennstoffstromerhöhung;
- Fig. 4: Ausgangskennlinien von Komponenten beim Abruf von Regelleistung; und
- Fig. 5: Ausgangskennlinien von Kraftwerkskomponenten mit Elektroenergiespeicher beim Abruf von Regelleistung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

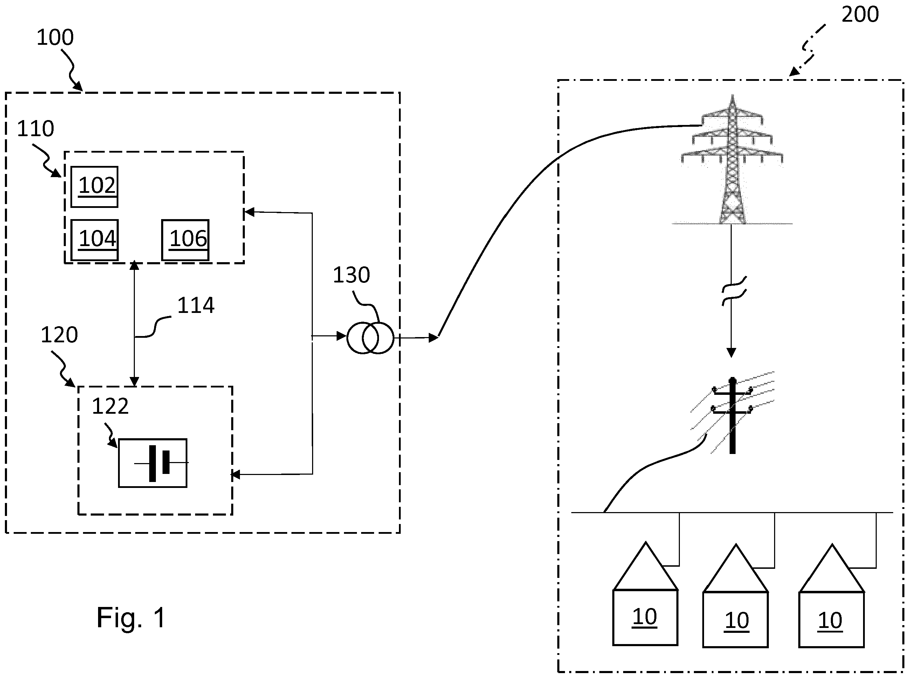

Figur 1 zeigt schematisch ein Blockdiagramm eines Kraftwerks 100 mit einem ersten Kraftwerkteil 110 und einem zweiten Kraftwerkteil 120 nach einem Ausführungsbeispiel der Erfindung. Das Kraftwerk 100 weist eine kraftwerkseitige Ausgangskomponente 130 auf, an der von außen ein Versorgungsnetz 200 angeschlossen ist.

Der erste Kraftwerkteil 110 umfasst in üblicher Weise einen Energieerzeugungsteil 102, einen Leittechnikteil 104 sowie einen Stellerteil 106. Der Stellerteil 106 ist vom Leittechnikteil 104 ansteuerbar, um aus dem Energieerzeugungsteil 102 elektrische Leistung zu gewinnen. Das Stellerteil 106 umfasst übliche Steller, wie z.B. Ventile, zum Einstellen einer Turbine, eines Brennstoffstroms und dergleichen, entsprechend dem Typ des Kraftwerks 100. Der erste Kraftwerkteil 110 ist dementsprechend vorzugsweise konventioneller Art, etwa in der Art eines GuD-Kraftwerks, eines Wasserkraftwerks oder eines Kohlekraftwerks.

Der Leittechnikteil 104 dient zur Regelung, vorzugweise zur Konstantregelung, der vom Kraftwerk 100 abgegebenen Leistung und erzeugt entsprechende Steuerbefehle, die an die Steller des Stellerteils 106 des ersten Kraftwerkteils 110 gegeben werden.

Der zweite Kraftwerkteil 120 ist als Elektroenergiespeicherteil ausgebildet und umfasst einen oder mehrere Elektroenergiespeicher 122. Der Elektroenergiespeicher 122 ist zur Abgabe oder Aufnahme von Elektroenergie vorgesehen. Der zweite Kraftwerkteil 120 weist zweckmäßigerweise einen eigenen Wechselrichter auf (nicht dargestellt), welcher die Gleichspannung des Elektroenergiespeichers 122 in eine Wechselspannung umsetzt, um über die kraftwerkseitige Ausgangskomponente 130 die Kopplung an das Versorgungsnetz 200 zu ermöglichen.

Der zweite Kraftwerkteil 120 ist mit dem Leittechnikteil 104 gekoppelt und von diesem ansteuerbar. Der erste und der zweite Kraftwerkteil 110, 120 bilden eine Einheit und stellen zusammen nach außen das Kraftwerk 100 dar. Zusammen mit dem ersten Kraftwerkteil 110 definiert der zweite Kraftwerkteil 120 die maximale Kraftwerk-Regelleistung.

Beispielsweise ist der erste Kraftwerkteil 110 mit 15 MW präqualifiziert, d.h. das Kraftwerk 100 kann ohne Elektroenergiespeicher 122 Primärregelleistung in Höhe von 15 MW erbringen. Der Elektroenergiespeicher 122 mit beispielsweise 5 MW erhöht die zu präqualifizierende Leistung des Kraftwerks 100 um 5 MW. Bei einem positiven PRL-Abruf erbringt der Elektroenergiespeicher 122 sofort, oder geregelt nach Bedarf, die maximale Leistung (z.B. 5 MW) bis der erste Kraftwerkteil 110 seine Leistung auf die geforderte Primärregelleistung von 15 + 5 MW hochgefahren hat. Danach erbringt der erste Kraftwerkteil 110 des Kraftwerks 100 solange 20 MW mit unbegrenzter Arbeitsfähigkeit, bis der PRL-Abruf zurückgefahren wird, bzw. durch einen Abruf von Sekundärregelleistung (SRL) abgelöst wird. Dies bedeutet, dass der Elektroenergiespeicher 122 den ersten Kraftwerkteil 110 nur so lange unterstützt, bis dieser seine Regelleistung im Rahmen seiner zulässigen Leistungsänderungsgradienten angepasst hat. Eine entsprechend implementierte Leittechnik zur Blockführung mit Elektroenergiespeichernutzung ist hierfür im Leittechnikteil 104 vorgesehen.

Dabei können im ersten Kraftwerkteil 110 in üblicher Weise ein oder mehrere konventionelle Speicher vorgesehen sein, etwa Dampfspeicher etc., welche den Elektroenergiespeicher 122 unterstützen. Bekannte übliche Speicher sind z.B. Speisewasserbehälter, Druckspeicher einer Dampferzeugeranlage, Kondensator einer Turbine für Kondensat und dergleichen.

Es ist möglich, dass der zweite Kraftwerkteil 120 temporär mit anderen Kraftwerken gekoppelt werden kann, um dort schnell Regelleistung bereitzustellen, etwa bei Revision oder anderweitigem Stillstand. Zweckmäßigerweise ist das zweite Kraftwerkteil 120 separat vom ersten Kraftwerkteil 110 an das Versorgungsnetz 200 angekoppelt.

Über eine Kommunikationsverbindung 114 mit entsprechender Kommunikationseinrichtung kann der Leittechnikteil 104 in Kommunikation mit dem zweiten Kraftwerkteil 120 treten. Ist eine Fernkopplung mit anderen Kraftwerken vorgesehen, kann deren Leittechnikteil mit dem zweiten Kraftwerkteil 120 sowie mit dem Leittechnikteil des ersten Kraftwerkteils 110 kommunizieren. Günstig ist eine Standleitung, jedoch kann jede geeignete Kommunikationsverbindung eingesetzt werden. Schnelle Signalübertragungen sind dabei bevorzugt, da diese wegen der notwendigen Regelung zweckmäßig sind.

Zweckmäßigerweise ist eine Ladezustandsüberwachung (nicht dargestellt) zur Überwachung des wenigstens einen Elektroenergiespeichers 122 des zweiten Kraftwerkteil 120 vorgesehen, um den Ladezustand des Elektroenergiespeichers 122 in einem Bereich zu halten, der die Abgabe und Aufnahme elektrischer Regelleistung im Betrieb jederzeit sicherstellt.

Der zweite Kraftwerkteil 120 mit dem einen oder mehreren Elektroenergiespeichern 122 kann mit dem ersten Kraftwerkteil 110 in einer Anlage angeordnet vorgesehen sein. Alternativ kann der zweite Kraftwerkteil 120 mit dem einen oder mehreren Elektroenergiespeichern 122 an einem anderen Standort als der erste Kraftwerkteil 110 innerhalb eines gemeinsamen Versorgungsnetzes 200 angeordnet, wobei der zweite Kraftwerkteil 120 mit dem ersten Kraftwerkteil 110 verbunden und an die kraftwerkseitige Ausgangskomponente 130 angeschlossen ist. Das Versorgungsnetz 200 ist von außen an die Ausgangskomponente 130 angeschlossen und sieht nur die Ausgangskomponente 130.

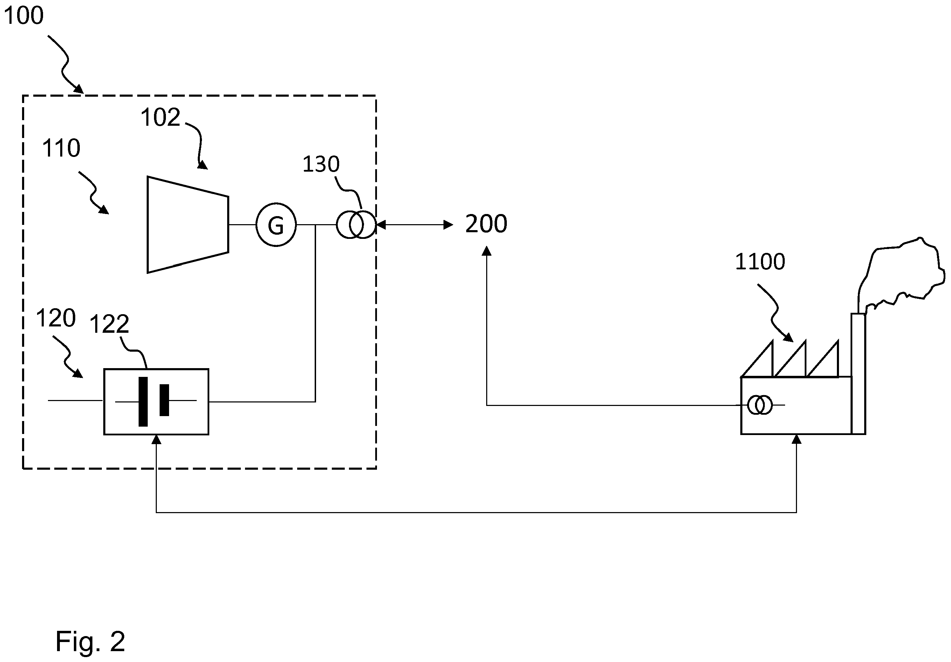

Figur 2 zeigt schematisch ein Blockdiagramm eines Kraftwerkverbunds mit wenigstens zwei Kraftwerken 100, 1100 nach einem Ausführungsbeispiel der Erfindung.

Der Kraftwerkverbund kann eine Mehrzahl von Kraftwerken 100 und 1100 umfassen zur Bereitstellung wenigstens von Regelleistung zur elektrischen Versorgung von Verbrauchern 10 in einem Versorgungsnetz 200.

Wenigstens ein Kraftwerk 100 weist einen ersten Kraftwerkteil 110 und einen zweiten Kraftwerkteil 120 auf. Der erste Kraftwerkteil 110 umfasst in üblicher Weise einen Energieerzeugungsteil 102, einen Leittechnikteil 104 sowie einen Stellerteil 106, wobei der Stellerteil 106 vom Leittechnikteil 104 ansteuerbar ist, um aus dem Energieerzeugungsteil 102 elektrische Leistung zu gewinnen.

Wie in Figur 1 ist der zweite Kraftwerkteil 120 als Elektroenergiespeicherteil ausgebildet und umfasst einen oder mehrere Elektroenergiespeicher 122, wobei der Elektroenergiespeicher 122 zur Abgabe oder Aufnahme von Elektroenergie vorgesehen ist und definiert zusammen mit dem ersten Kraftwerkteil 110 die maximale Kraftwerk-Regelleistung. Der erste Kraftwerkteil 110 ist durch eine oder mehrere Energieerzeugungseinheiten wie Kessel, Turbine etc. gekennzeichnet, deren Gesamtheit als Energieerzeugungsteil 102 dargestellt ist. Die beiden Kraftwerkteile 110, 120 sind kraftwerkseitig so miteinander gekoppelt, dass ihre Gesamtleistung kraftwerkseitig der Ausgangskomponente 130 zugeführt wird. Die Ausgangskomponente 130 gibt die Leistung des Kraftwerks 100 an das Versorgungsnetz 200 aus.

Der zweite Kraftwerkteil 120 ist separat zum ersten Kraftwerkteil 110 des Kraftwerks 100 temporär mit unterschiedlichen Kraftwerken 1100 des Kraftwerkverbunds indem Versorgungsnetz 200 koppelbar. Dabei können auch Kraftwerke 1100, die ohne Elektroenergiespeicherteil ausgelegt sind, temporär mit dem Elektroenergiespeicher 122 des zweiten Kraftwerkteils 120 des Kraftwerks 100 gekoppelt werden, und zwar auf der kraftwerkseitigen Seite der jeweiligen Ausgangskomponente. Im Revisionsfall kann aber der Elektroenergiespeicher 122 mit anderen in Betrieb befindlichen Kraftwerken 1100 verschaltet werden.

Die ersten und zweiten Kraftwerkteile 110, 120 sind im gezeigten Beispiel räumlich eng benachbart im Kraftwerk 100 angeordnet. Alternativ kann der zweite Kraftwerkteil 120 innerhalb des Versorgungsnetzes 200 räumlich getrennt zu dem ersten Kraftwerkteile 110 des Kraftwerks 100 angeordnet sein. Aus netztechnischen Gründen kann eine solche räumlich entfernte Aufstellung günstig sein, etwa zur Blindleistungshaltung zur Spannungsregelung..

Der zweite Kraftwerkteil 120 bildet in Kombination mit einem ersten Kraftwerkteil 110 insgesamt das Kraftwerk 100 zur Bereitstellung von Primärregelleistung. Im Kraftwerkverbund können mehrere derartige Kraftwerke 100 mit erstem und zweiten Kraftwerkteil 110, 120 vorgesehen sein. Alternativ oder zusätzlich können rein konventionelle Kraftwerke 1100 vorgesehen sein, die kein Energiespeicherteil als zweiten Kraftwerkteil aufweisen.

Der zweite Kraftwerkteil 120 ist über eine Kommunikationsverbindung 114 mit dem jeweiligen Leittechnikteil 104 der ersten Kraftwerkteile 110 und/oder dem weiteren konventionellen Kraftwerke 1100 in Kommunikationsverbindung, so dass der Kraftwerkverbund über Echtzeitdatenübertragung schnell auf Anforderungen von Regelleistung reagieren kann.

Optional kann wenigstens eine Photovoltaikanlage und/oder wenigstens eine Windkraftanlage mit mindestens einem Elektroenergiespeicher vorgesehen sein, der wenigstens zeitweise im Sinne eines zweiten Kraftwerkteils 120 mit wenigstens einem der Kraftwerke 100 oder 1100 koppelbar ist oder wenigstens zeitweise mit wenigstens einem der Kraftwerke 100 integriert vorgesehen ist. Scheint keine Sonne, kann der Elektroenergiespeicher als zweites Kraftwerkteil 120 durch das Kraftwerk 100 genutzt werden. Weiterhin ist auch Windenergie stark fluktuierend. Lokale Elektroenergiespeicher in der Nähe von Windkraftanlagen können zur Glättung der Wind-Einspeiseleistung beitragen. Bei Windflauten können diese ebenfalls mit einem oder mehreren der Kraftwerke 100 im Sinne einer Zusammenschaltung von ersten und zweiten Kraftwerkteilen 110, 120 zusammengeschaltet werden.

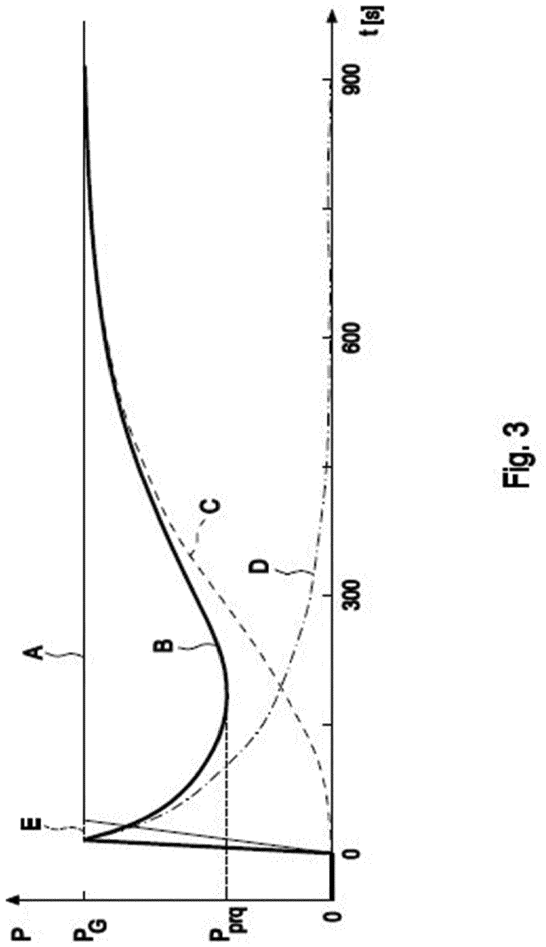

Figur 3 zeigt Kennlinien der Leistungsabgabe am Beispiel eines Kohlekraftwerks 1100 (Figur 2) konventioneller Art mit Nutzung eines üblichen internen Speichers in Form eines Dampfspeichers oder Kessels bei Abruf von Primärregelleistung bei einer Unterversorgung des Versorgungsnetzes. Das konventionelle Kraftwerk 1100 (Figur 2) weist keinen zweiten Kraftwerksteil mit Elektroenergiespeicher auf. Die Turbineneinlassventile des Kraftwerks 1100 (Figur 2) sind üblicherweise ständig angedrosselt. Kommt es zum Frequenzeinbruch, öffnen diese Ventile. Der Dampfspeicher entlädt sich. Der Dampferzeuger erhöht seine Leistung langsam, bis er die durch den Frequenzeinbruch geforderte Mehrleistung abdecken kann.

Kennlinie A zeigt die geforderte Primärregelleistung P des Kraftwerks 1100 (Figur 2). Innerhalb weniger Sekunden muss eine über 900 s konstante Regelleistung P_{G} verfügbar sein.

Die vom Kraftwerk 1100 (Figur 2) abgegebene Leistung ist durch Kennlinie B dargestellt. Nach etwa 150 s ist ein ausgeprägtes Minimum P_{prq} der abgegebenen Leistung erkennbar, welcher etwa 50% der konstante Regelleistung P_{G} entspricht. Diese Leistung P_{prq} entspricht der Leistung, für die das Kraftwerk 1100 (Figur 2) ohne zweiten Kraftwerkteil 120 eines Kraftwerks 100 (Figur 1, 2) präqualifiziert werden könnte. Nach dem Minimum steigt die abgegebene Leistung P langsam auf den gewünschten Wert P_{G} an.

Der Dampferzeuger (Kessel) des Kraftwerks 1100 (Figur 2) ohne Elektroenergiespeicherteil benötigt ca. 900 s zur vollen Leistungsbereitstellung, was durch Kennlinie C dargestellt ist. Diese zeigt die generierte Leistung P durch eine reine Brennstoffstromerhöhung zum Kessel.

Bei Auftreten der Regelleistungsanforderung wird im ersten Schritt Leistung aus dem Dampfspeicher-Kessel durch die Turbine bereitgestellt, indem durch Ventilöffnung eine erste Leistungserhöhung erfolgt, was mit Kennlinie D dargestellt ist.

Die Kennlinie B ist die Summe der Kennlinien C und D.

Wäre das Kraftwerk 1100 (Figur 2) stattessen wie ein Kraftwerk 100 (Figur 1, 2) zusätzlich zu einem konventionellen ersten Kraftwerkteil 110 (Figur 1, 2) mit einem Elektroenergiespeicher 122 (Figur 1, 2) im Sinne eines zweiten Kraftwerkteils 120 (Figur 1, 2) ausgestattet, die kraftwerkseitig vor der Ausgangskomponente 130 des Kraftwerks 100 (Figur 1, 2) verbunden sind, würde die vom Kraftwerk 100 (Figur 1, 2) abgegebene Regelleistung der Kennlinie A sowie bei kleinen Zeiten der Kennlinie E entsprechen, da die Regelleistung des Elektroenergiespeichers sehr schnell zur Verfügung steht. Dann entspräche die Leistung P_{G} der Leistung, für die das Kraftwerk 100 (Figur 1, 2) mit zweiten Kraftwerkteil 120 (Figur 1, 2) präqualifiziert werden würde, ohne dass die Kraftwerkskomponenten größer und entsprechend aufwändiger und teurer ausgelegt werden müssten.

Die Fläche zwischen der Kennlinie B und den Kennlinien A und E wäre die von dem Elektroenergiespeicher 122 (Figur 1, 2) bereitgestellte Energie. Im Minimum der Kennlinie B wäre die von dem Elektroenergiespeicher bereitgestellte Leistung maximal und würde dann entsprechend der Kennlinie B mit zunehmender Zeit abnehmen.

Bei einer Überversorgung des Versorgungsnetzes muss Leistung aus dem Versorgungsnetz abgenommen werden. Die Kennlinien wären dann an der Zeitachse gespiegelt nach unten bei negativen Leistungen aufgetragen.

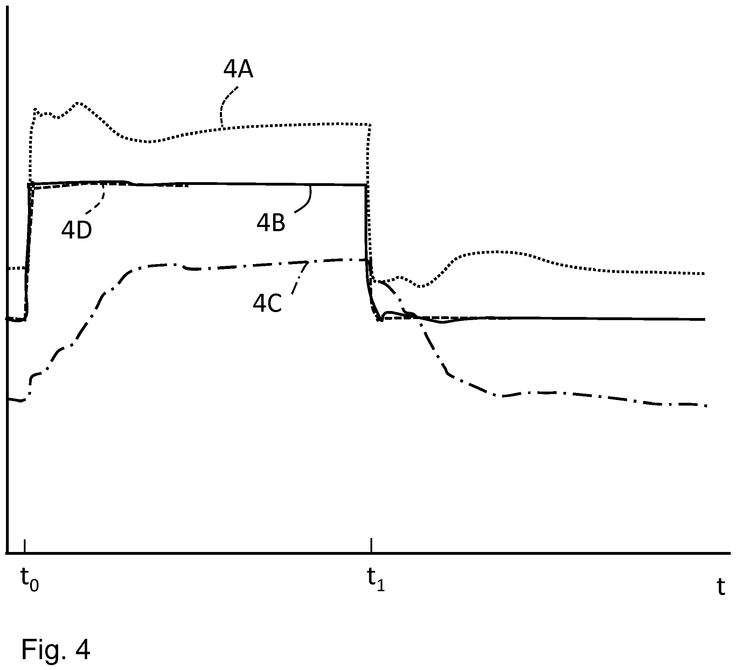

Figur 4 zeigt Ausgangskennlinien von Komponenten bei einem Abruf von Regelleistung bei einem Kraftwerk mit Dampferzeuger als Funktion der Zeit. Bezüglich der vertikalen Achse sind die Kennlinien relativ zueinander aufgetragen, um die Kennlinien miteinander vergleichen zu können. Dabei zeigt Kennlinie 4A die Menge des dem Dampferzeuger zugeführten Brennstoffs, Kennlinie 4B die elektrische Ist-Leistung, Kennlinie 4C der Sollwert des Speisewassermassenstroms und Kennlinie 4D die elektrische Soll-Leistung.

Aufgrund einer Anforderung von der Netz-Frequenz an die elektrische Leistungsbereitstellung, entsprechend Kennlinie 4B, zeigt die Brennstoffleistung des Dampferzeugers entsprechend der Kennlinie 4A bei t₀ zunächst eine sprungförmige Erhöhung und bei t=t₁ eine sprunghafte Absenkung.

Die Antwort des Gesamtsystems Kraftwerk 100 mit erstem und zweitem Kraftwerkteil 110, 120 (Figur 1, 2), d.h. mit Elektroenergiespeicher 122, entsprechend Kennlinie 4D (elektrische Soll-Leistung), folgt fast ohne Abweichungen der Kennlinie 4B (elektrische Ist-Leistung). Weiterhin ist die Erhöhung des Sollwertes des Speisewassermassenstroms zum Verdampfer des Dampferzeugers entsprechend der Kennlinie 4C als weitere wesentliche Stellgröße dargestellt.

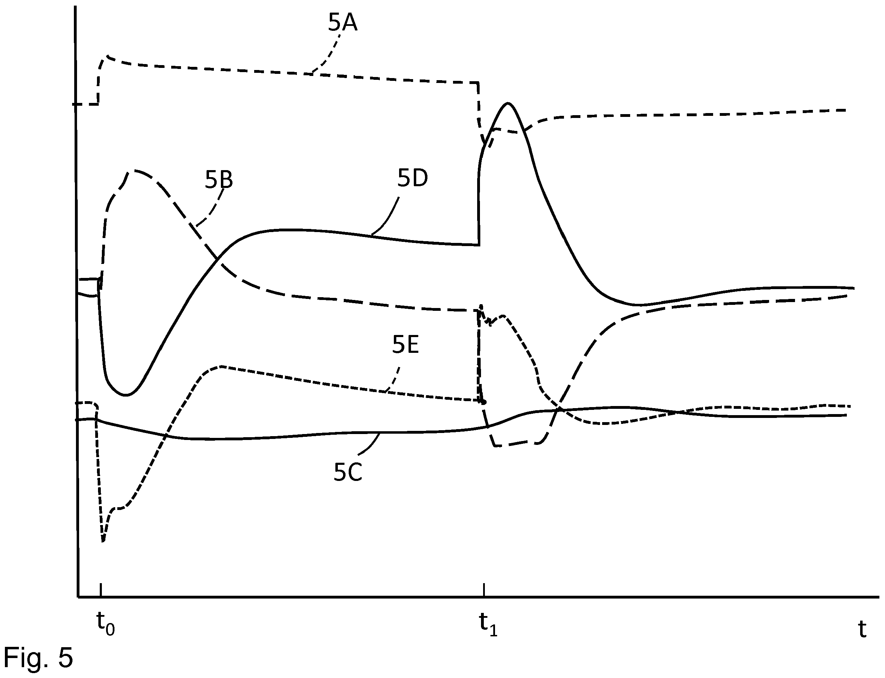

Figur 5 zeigt Ausgangskennlinien von Kraftwerkskomponenten bei einem Abruf von Regelleistung bei einem Kraftwerk mit Dampferzeuger als erstem Kraftwerkteil 110 (Figur 1, 2) als Funktion der Zeit. Hier sind die zeitlichen Detailverläufe der Hauptstellgrößen für die Aktivierung der verschiedenen Speicher im Kraftwerk dargestellt. Die Zeitachse entspricht der Zeitachse in Figur 4. Bezüglich der vertikalen Achse sind die Kennlinien relativ zueinander aufgetragen, um die Kennlinien miteinander vergleichen zu können.

Dabei zeigt Kennlinie 5A den Sollwert für die Öffnung des Turbinenventils, Kennlinie 5B die Leistungsabgabe des z.B. als Batterie ausgebildeten Elektroenergiespeichers, Kennlinie 5C das Niveau des Speisewasserbehälters, Kennlinie 5D den Massenstrom an Kondensat zum Speisewasserbehälter und Kennlinie 5E den Sollwert für die Stellung der Dampf-Regelklappe zum Speisewasserbehälter.

Aufgrund der frequenzbedingten Leistungserhöhung, die praktisch sprungartig bei to erfolgt, wird das Turbinenventil geöffnet, was als Kennlinie 5A dargestellt ist. Das Kondensatregelventil wird geschlossen bzw. der Kondensatmassenstrom erniedrigt (Kennlinie 5D), das Dampfregelventil zum Speisewasserbehälter (Kennlinie 5E) geschlossen. In der Folge sinkt das Niveau im Speisewasserbehälter, was Kennlinie 5C wiedergibt. In diesem Beispiel sind drei konventionelle Speicher des Kraftwerks aktiviert worden, nämlich der Speisewasserbehälter, der Druckspeicher Dampferzeugeranlage und der Kondensator Turbine für Kondensat.

Kennlinie 5B zeigt die entsprechende Leistungsabgabe des Elektroenergiespeichers, wenn das Kraftwerk 100 mit einem ersten Kraftwerkteil 110 und einem zweiten Kraftwerkteil 120 (Figur 1, 2) besteht. Bei ist das Maximum der Leistungsabgabe liegt bei kleinen Zeiten ab und nahe to und fällt zu größeren Zeiten wieder ab.

## Patentansprüche

1. Kraftwerk (100) zur Bereitstellung wenigstens von Regelleistung für ein Versorgungsnetz (200) und/oder von Leistung zur elektrischen Versorgung von Verbrauchern (10) in einem Versorgungsnetz (200) an einer kraftwerkseitigen Ausgangskomponente (130), und mit einem ersten Kraftwerkteil (110) und einem zweiten Kraftwerkteil (120),
wobei der erste Kraftwerkteil (110) einen Energieerzeugungsteil (102), einen Leittechnikteil (104) sowie einen vom Leittechnikteil (104) ansteuerbaren Stellerteil (106) zum Gewinnen von elektrischer Leistung aus dem Energieerzeugungsteil (102) umfasst, und ein konventionelles Kraftwerk ist, wie Kohlekraftwerk, Wasserkraftwerk, Pumpspeicherkraftwerk, Gas-und-Dampf - Kraftwerk oder dergleichen,
wobei der zweite Kraftwerkteil (120) als Elektroenergiespeicherteil ausgebildet ist und einen oder mehrere Elektroenergiespeicher (122) umfasst, der zur Abgabe oder Aufnahme von Elektroenergie vorgesehen und von dem Leittechnikteil (104) ansteuerbar ist und
**dadurch gekennzeichnet, dass**
wobei die beiden Kraftwerkteile (110, 120) bezogen auf die Regelleistung des Kraftwerks (100) eine Einheit bilden und die kraftwerkseitige Ausgangskomponente (130) elektrisch zwischen das Versorgungsnetz (200) und die beiden Kraftwerkteile (110, 120) geschaltet ist und die beiden Kraftwerkteile (110, 120) kraftwerkseitig so miteinander gekoppelt sind, dass ihre Gesamtleistung kraftwerkseitig der Ausgangskomponente (130) zugeführt wird und die Ausgangskomponente (130) die Leistung des Kraftwerks (100) an das Versorgungsnetz (200) ausgibt,
wobei bei Bedarf an Regelleistung im Versorgungsnetz (200) der zweite Kraftwerkteil (120) über die kraftwerkseitige Ausgangskomponente (130) wenigstens einen Teil der benötigten Leistung über einen vorgegebenen Zeitraum bereitstellt, während die Leistung des ersten Kraftwerkteils (110) an die angeforderte Regelleistung angepasst wird, wobei durch die Einbindung des zweiten Kraftwerkteils (120) eine schnelle Bereitstellung von Regelleistung erfolgt.

2. Kraftwerk nach Anspruch 1, **dadurch gekennzeichnet, dass** eine Kommunikationsverbindung (114) vorgesehen ist, mit welcher der Leittechnikteil (104) in Kommunikationsverbindung mit dem zweiten Kraftwerkteil (120) treten kann.

3. Kraftwerk nach Anspruch 1 oder 2, **dadurch gekennzeichnet, dass** der zweite Kraftwerkteil (120) räumlich benachbart zum ersten Kraftwerkteil (110) angeordnet ist.

4. Kraftwerk nach Anspruch 1 oder 2, **dadurch gekennzeichnet, dass** der zweite Kraftwerkteil (120) räumlich entfernt vom ersten Kraftwerkteil (110) im gleichen Versorgungsnetz (200) angeordnet ist.

5. Kraftwerk nach einem der vorhergehenden Ansprüche, **dadurch gekennzeichnet, dass** eine Ladezustandsüberwachung zur Überwachung des wenigstens einen Elektroenergiespeichers (122) des zweiten Kraftwerkteils (120) vorgesehen ist.

6. Kraftwerk nach einem der vorhergehenden Ansprüche, **dadurch gekennzeichnet, dass** der zweite Kraftwerkteil (120) für eine Leistung von wenigstens 3 MW, vorzugsweise von wenigstens 4 MW, besonders bevorzugt von wenigstens 5 MW ausgelegt ist.

7. Kraftwerk nach einem der vorhergehenden Ansprüche, **dadurch gekennzeichnet, dass** wenigstens eine Photovoltaikanlage und/oder wenigstens eine Windkraftanlage mit mindestens einem Elektroenergiespeicher vorgesehen ist, der wenigstens zeitweise mit dem Kraftwerk (100) koppelbar ist oder wenigstens zeitweise mit dem Kraftwerk (100) integriert vorgesehen ist.

8. Kraftwerkverbund mit einer Mehrzahl von Kraftwerken (100, 1100) zur Bereitstellung wenigstens von Regelleistung für ein Versorgungsnetz und/oder Leistung zur elektrischen Versorgung von Verbrauchern (10) in einem Versorgungsnetz (200),
wobei wenigstens ein Kraftwerk (100) nach einem der vorhergehenden Ansprüche vorgesehen ist, das einen ersten Kraftwerkteil (110) und einen zweiten Kraftwerkteil (120) aufweist,
wobei eine kraftwerkseitige Ausgangskomponente (130) des wenigstens einen Kraftwerks (100) zwischen dem Versorgungsnetz (200) und den beiden Kraftwerkteilen (110, 120) dieses Kraftwerks (100) angeordnet ist, und die beiden Kraftwerkteile (110, 120) kraftwerkseitig so miteinander gekoppelt sind, dass ihre Gesamtleistung kraftwerkseitig der Ausgangskomponente (130) zugeführt wird und die Ausgangskomponente (130) die Leistung des Kraftwerks (100) an das Versorgungsnetz (200) ausgibt,
wobei wenigstens ein weiteres Kraftwerk (1100) wenigstens zeitweise mit dem zweiten Kraftwerkteil (120) gekoppelt ist und das weitere Kraftwerk (1100) und der zweite Kraftwerkteil (120) temporär separat zum ersten Kraftwerkteil (110) so miteinander koppelbar sind, dass ihre Gesamtleistung kraftwerkseitig der Ausgangskomponente des weiteren Kraftwerks (1100) zugeführt wird und die Ausgangskomponente des weiteren Kraftwerks (1100) die Leistung des weiteren Kraftwerks (1100) und des zweiten Kraftwerkteils (120) an das Versorgungsnetz (200) ausgibt,
wobei durch die Einbindung des zweiten Kraftwerkteils (120) eine schnelle Bereitstellung von Regelleistung des weiteren Kraftwerks (1100) erfolgt.

9. Kraftwerkverbund nach Anspruch 8, wobei mehrere zweite Kraftwerkteile (120) zur zeitweisen Kopplung mit verschiedenen Kraftwerken (100) vorgesehen sind.

10. Kraftwerkverbund nach einem der Ansprüche 8 oder 9, wobei wenigstens eine Photovoltaikanlage und/oder wenigstens eine Windkraftanlage mit mindestens einem Elektroenergiespeicher vorgesehen ist, der wenigstens zeitweise mit wenigstens einem Kraftwerk (100) koppelbar ist oder wenigstens zeitweise mit wenigstens einem Kraftwerk (100) integriert vorgesehen ist.

11. Verfahren zum Betreiben eines Kraftwerks (100) zur Bereitstellung wenigstens von Regelleistung für ein Versorgungsnetz (200) und/oder Leistung zur elektrischen Versorgung von Verbrauchern (10) in einem Versorgungsnetz (200) an einer kraftwerkseitigen Ausgangskomponente (130), und mit einem ersten Kraftwerkteil (110) und einem zweiten Kraftwerkteil (120),
wobei der erste Kraftwerkteil (110) einen Energieerzeugungsteil (102), einen Leittechnikteil (104) sowie einen vom Leittechnikteil (104) ansteuerbaren Stellerteil (106) zum Gewinnen von elektrischer Leistung aus dem Energieerzeugungsteil (102) umfasst, und ein konventionelles Kraftwerk ist, wie Kohlekraftwerk, Wasserkraftwerk, Pumpspeicherkraftwerk, Gas-und-Dampf - Kraftwerk oder dergleichen,
wobei der zweite Kraftwerkteil (120) als Elektroenergiespeicherteil ausgebildet ist und einen oder mehrere Elektroenergiespeicher (122) umfasst zum Ausgeben oder Aufnehmen von Elektroenergie, und wenigstens zeitweise mit dem Leittechnikteil (104) gekoppelt und von diesem angesteuert wird,
wobei der erste und zweite Kraftwerkteil (110, 120) bezogen auf die Regelleistung des wenigstens einen Kraftwerks (100) eine Einheit bilden, und die kraftwerkseitige Ausgangskomponente (130) elektrisch zwischen das Versorgungnetz (200) und die beiden Kraftwerkteile (110, 120) geschaltet ist und die beiden Kraftwerkteile (110, 120) kraftwerkseitig so miteinander gekoppelt sind, dass ihre Gesamtleistung kraftwerkseitig der Ausgangskomponente (130) zugeführt wird und die Ausgangskomponente (130) die Leistung des Kraftwerks (100) an das Versorgungsnetz (200) ausgibt,
wobei bei Bedarf an Regelleistung im Versorgungsnetz (200) der zweite Kraftwerkteil (120) über die kraftwerkseitige Ausgangskomponente (130) wenigstens einen Teil der benötigten Leistung über einen vorgegebenen Zeitraum bereitstellt, während die Leistung des ersten Kraftwerkteils (110) an die angeforderte Regelleistung angepasst wird, wobei durch die Einbindung des zweiten Kraftwerkteils (120) eine schnelle Bereitstellung von Regelleistung erfolgt.

12. Verfahren zum Betreiben eines Kraftwerkverbunds mit einer Mehrzahl von Kraftwerken (100, 1100), welche wenigstens Regelleistung für ein Versorgungsnetz (200) und/oder Leistung zur elektrischen Versorgung von Verbrauchern (10) in einem Versorgungsnetz (200) bereitstellen, wobei wenigstens ein Kraftwerk (100) nach einem der Ansprüche 1 bis 7 ausgebildet ist, das einen ersten Kraftwerkteil (110) und einen zweiten Kraftwerkteil (120) aufweist, die bezogen auf die Regelleistung des wenigstens einen Kraftwerks (100) eine Einheit bilden und
wobei eine kraftwerkseitige Ausgangskomponente (130) des wenigstens einen Kraftwerks (100)zwischen dem Versorgungsnetz (200) und den beiden Kraftwerkteilen (110, 120) dieses Kraftwerks (100) angeordnet ist, und die beiden Kraftwerkteile (110, 120) kraftwerkseitig so miteinander gekoppelt sind, dass ihre Gesamtleistung kraftwerkseitig der Ausgangskomponente (130) zugeführt wird und die Ausgangskomponente (130) die Leistung des Kraftwerks (100) an das Versorgungsnetz (200) ausgibt,
wobei ein weiteres Kraftwerk (1100) wenigstens zeitweise mit dem zweiten Kraftwerkteil (120) des einen Kraftwerks (100) gekoppelt wird, und bei Bedarf an Regelleistung im Versorgungsnetz (200) wenigstens einen Teil der benötigten Leistung über einen vorgegebenen Zeitraum bereitstellt, während die Leistung des weiteren Kraftwerks (1100) an die angeforderte Regelleistung angepasst wird, und das weitere Kraftwerk (1100) und der zweite Kraftwerkteil (120) temporär separat zum ersten Kraftwerkteil (110) so miteinander koppelbar sind, dass ihre Gesamtleistung kraftwerkseitig der Ausgangskomponente des weiteren Kraftwerks (1100) zugeführt wird und die Ausgangskomponente des weiteren Kraftwerks (1100) die Leistung des weiteren Kraftwerks (1100) und des zweiten Kraftwerkteils (120) an das Versorgungsnetz (200) ausgibt,
wobei durch die Einbindung des zweiten Kraftwerkteils (120) eine schnelle Bereitstellung von Regelleistung des weiteren Kraftwerks (1100) erfolgt.

13. Verfahren nach Anspruch 11 oder 12, wobei der Leittechnikteil (104) korrespondierend zur gelieferten oder aufgenommenen elektrischen Leistung des zweiten Kraftwerkteils (120) Steuerungsbefehle an Stellgrößen des ersten Kraftwerkteils (110) und/oder des weiteren Kraftwerks (1100) ausgibt, um dessen Leistung zu erhöhen oder zu verringern.

14. Verfahren nach einem der Ansprüche 11 bis 13, wobei die Leistung des zweiten Kraftwerkteils (120) entsprechend der aktuell benötigten Regelleistung und der aktuell verfügbaren Leistung des ersten Kraftwerkteils (110) und/oder des weiteren Kraftwerks (1100) angepasst wird.

15. Verfahren nach einem der Ansprüche 11 bis 14, wobei bei Anforderung positiver Regelleistung der zweite Kraftwerkteil (120) Leistung an das Versorgungsnetz (200) abgibt und bei Anforderung negativer Regelleistung der zweite Kraftwerkteil (120) Leistung aus dem Versorgungsnetz (200) aufnimmt.

## Claims

1. Power station (100) for providing at least control power for a power supply system (200) and/or power for supplying electricity to loads (10) in a power supply system (200) using a power-station output component (130), and having a first power station part (110) and a second power station part (120), wherein the first power station part (110) comprises an energy generation part (102), a control engineering part (104) and a controller part (106), actuatable by the control engineering part (104), for obtaining electric power from the energy generation part (102), and is a conventional power station, such as a coal-fired power station, a hydroelectric power station, a pumped-storage power station, a gas-and-steam power station or the like, wherein the second power station part (120) is in the form of an electrical energy storage part and comprises one or more electrical stores (122) intended to deliver or receive electrical energy and actuatable by the control engineering part (104), and
**characterized in that**
wherein the two power station parts (110, 120) form a unit based on the control power of the power station (100), and the power-station output component (130) is electrically connected between the power supply system (200) and the two power station parts (110, 120), and the two power station parts (110, 120) are coupled to one another at the power station such that their total power is supplied to the output component (130) by the power station, and the output component (130) outputs the power of the power station (100) to the power supply system (200),
wherein if control power is required in the power supply system (200) then the second power station part (120) uses the power-station output component (130) to provide at least part of the required power over a prescribed period, while the power of the first power station part (110) is matched to the requested control power, the incorporation of the second power station part (120) resulting in fast provision of control power.

2. Power station according to Claim 1, **characterized in that** there is provision for a communication connection (114), by means of which the control engineering part (104) can communicatively connect to the second power station part (120).

3. Power station according to Claim 1 or 2, **characterized in that** the second power station part (120) is arranged physically adjacently to the first power station part (110).

4. Power station according to Claim 1 or 2, **characterized in that** the second power station part (120) is arranged physically remotely from the first power station part (110) in the same power supply system (200).

5. Power station according to one of the preceding claims, **characterized in that** there is provision for state of charge monitoring for monitoring the at least one electrical energy store (122) of the second power station part (120).

6. Power station according to one of the preceding claims, **characterized in that** the second power station part (120) is designed for a power of at least 3 MW, preferably of at least 4 MW, particularly preferably of at least 5 MW.

7. Power station according to one of the preceding claims, **characterized in that** there is provision for at least one photovoltaic installation and/or at least one wind power installation having at least one electrical energy store that is at least intermittently couplable to the power station (100) or is at least intermittently provided in a manner integrated with the power station (100).

8. Power station complex having a plurality of power stations (100, 1100) for providing at least control power for a power supply system and/or power for supplying electricity to loads (10) in a power supply system (200),
wherein there is provision for at least one power station (100) according to one of the preceding claims that has a first power station part (110) and a second power station part (120),
wherein a power-station output component (130) of the at least one power station (100) is arranged between the power supply system (200) and the two power station parts (110, 120) of this power station (100), and the two power station parts (110, 120) are coupled to one another at the power station such that their total power is supplied to the output component (130) by the power station, and the output component (130) outputs the power of the power station (100) to the power supply system (200), wherein at least one further power station (1100) is at least intermittently coupled to the second power station part (120), and the further power station (1100) and the second power station part (120) are temporarily couplable to one another, separately from the first power station part (110), such that their total power is supplied to the output component of the further power station (1100) by the power station, and the output component of the further power station (1100) outputs the power of the further power station (1100) and of the second power station part (120) to the power supply system (200),
the incorporation of the second power station part (120) resulting in fast provision of control power of the further power station (1100).

9. Power station complex according to Claim 8, wherein there is provision for multiple second power station parts (120) for intermittent coupling to different power stations (100).

10. Power station complex according to either of Claims 8 and 9, wherein there is provision for at least one photovoltaic installation and/or at least one wind power installation having at least one electrical energy store that is at least intermittently couplable to at least one power station (100) or is at least intermittently provided in a manner integrated with at least one power station (100).

11. Method for operating a power station (100) for providing at least control power for a power supply system (200) and/or power for supplying electricity to loads (10) in a power supply system (200) using a power-station output component (130), and having a first power station part (110) and a second power station part (120),
wherein the first power station part (110) comprises an energy generation part (102), a control engineering part (104) and a controller part (106), actuatable by the control engineering part (104), for obtaining electric power from the energy generation part (102), and is a conventional power station, such as a coal-fired power station, a hydroelectric power station, a pumped-storage power station, a gas-and-steam power station or the like, wherein the second power station part (120) is in the form of an electrical energy storage part and comprises one or more electrical energy stores (122) for outputting or receiving electrical energy, and is at least intermittently coupled to the control engineering part (104) and actuated thereby,
wherein the first and second power station parts (110, 120) form a unit based on the control power of the at least one power station (100), and the power-station output component (130) is electrically connected between the power supply system (200) and the two power station parts (110, 120), and the two power station parts (110, 120) are coupled to one another at the power station such that their total power is supplied to the output component (130) by the power station, and the output component (130) outputs the power of the power station (100) to the power supply system (200),
wherein if control power is required in the power supply system (200) then the second power station part (120) uses the power-station output component (130) to provide at least part of the required power over a prescribed period, while the power of the first power station part (110) is matched to the requested control power, the incorporation of the second power station part (120) resulting in fast provision of control power.

12. Method for operating a power station complex having a plurality of power stations (100, 1100) that provide at least control power for a power supply system (200) and/or power for supplying electricity to loads (10) in a power supply system (200), wherein at least one power station (100) is designed according to one of Claims 1 to 7 and has a first power station part (110) and a second power station part (120) that form a unit based on the control power of the at least one power station (100), and
wherein a power-station output component (130) of the at least one power station (100) is arranged between the power supply system (200) and the two power station parts (110, 120) of this power station (100), and the two power station parts (110, 120) are coupled to one another at the power station such that their total power is supplied to the output component (130) by the power station, and the output component (130) outputs the power of the power station (100) to the power supply system (200),
wherein a further power station (1100) is at least intermittently coupled to the second power station part (120) of the one power station (100), and, if control power is required in the power supply system (200), provides at least part of the required power over a prescribed period, while the power of the further power station (1100) is matched to the requested control power, and the further power station (1100) and the second power station part (120) are temporarily couplable to one another, separately from the first power station part (110), such that their total power is supplied to the output component of the further power station (1100) by the power station, and the output component of the further power station (1100) outputs the power of the further power station (1100) and of the second power station part (120) to the power supply system (200),
the incorporation of the second power station part (120) resulting in fast provision of control power of the further power station (1100).

13. Method according to Claim 11 or 12, wherein the control engineering part (104), in a manner corresponding to the delivered or received electric power of the second power station part (120), outputs control commands for manipulated variables of the first power station part (110) and/or of the further power station (1100) in order to increase or decrease the power thereof.

14. Method according to one of Claims 11 to 13, wherein the power of the second power station part (120) is adapted in accordance with the currently required control power and the currently available power of the first power station part (110) and/or of the further power station (1100).

15. Method according to one of Claims 11 to 14, wherein a request for positive control power results in the second power station part (120) delivering power to the power supply system (200), and a request for negative control power results in the second power station part (120) receiving power from the power supply system (200).

## Revendications

1. Centrale électrique (100) destinée à mettre à disposition au moins de la puissance de réglage pour un réseau d'alimentation (200) et/ou de la puissance pour l'alimentation électrique de consommateurs (10) au sein d'un réseau d'alimentation (200) sur une composante de sortie (130) côté centrale électrique et pourvue d'une première partie (110) de centrale électrique et d'une deuxième partie (120) de centrale électrique,
la première partie (110) de centrale électrique comprenant une partie génératrice d'électricité (102), une partie technique de gestion (104), ainsi qu'une partie de commande (106) activable par la partie technique de gestion (104) pour obtenir de la puissance électrique à partir de la partie génératrice d'électricité (102) et étant une centrale électrique conventionnelle, comme une centrale au charbon, une centrale hydraulique, une centrale de pompage-turbinage, une centrale gaz et vapeur ou similaire.
la deuxième partie (120) de centrale électrique étant conçue sous la forme d'un groupe accumulateur d'énergie électrique et comprenant un ou plusieurs accumulateurs d'énergie électrique (122) qui sont prévues pour distribuer ou pour recevoir de l'énergie électrique et qui sont activables par la partie technique de gestion (104) et
**caractérisée en ce que**
dans laquelle les deux parties (110, 120) de centrale électrique forment un groupe en rapport à la puissance de réglage de la centrale électrique (100) et la composante de sortie (130) côté centrale électrique est électriquement connectée entre le réseau d'alimentation (200) et les deux parties (110, 120) de centrale électrique et les deux parties (110, 120) de centrale électrique sont couplées l'une à l'autre de telle sorte que leur puissance totale soit alimentée côté centrale électrique vers la composante de sortie (130) et la composante de sortie (130) distribue la puissance de la centrale électrique (100) au réseau d'alimentation (200),
en cas de besoin de puissance de réglage au sein du réseau d'alimentation (200), la deuxième partie (120) de centrale électrique mettant à disposition sur une période prédéfinie, par l'intermédiaire de la composante de sortie (130) côté centrale électrique, au moins une partie de la puissance nécessaire, alors que la puissance de la première partie (110) de centrale électrique est adaptée à la puissance de réglage exigée, par intégration de la deuxième partie (120) de centrale électrique, une mise à disposition rapide de puissance de réglage ayant lieu.

2. Centrale électrique selon la revendication 1, **caractérisée en ce qu'**il est prévu une liaison de communication (114) via laquelle la partie technique de gestion (104) peut entrer en liaison de communication avec la deuxième partie (120) de centrale électrique.

3. Centrale électrique selon la revendication 1 ou 2, **caractérisée en ce que** la deuxième partie (120) de centrale électrique est placée au voisinage physique de la première partie (110) de centrale électrique.

4. Centrale électrique selon la revendication 1 ou 2, **caractérisée en ce que** la deuxième partie (120) de centrale électrique est placée au sein du même réseau d'alimentation (200) en étant physiquement éloignée de la première partie (110) de centrale électrique.

5. Centrale électrique selon l'une quelconque des revendications précédentes, **caractérisée en ce qu'**il est prévu une supervision de l'état de charge pour superviser l'au moins un accumulateur d'énergie électrique (122) de la deuxième partie (120) de centrale électrique.

6. Centrale électrique selon l'une quelconque des revendications précédentes, **caractérisée en ce que** la deuxième partie (120) de centrale électrique est conçue pour une puissance d'au moins 3 MW, de préférence d'au moins 4 MW, de manière particulièrement préférentielle, d'au moins 5 MW.

7. Centrale électrique selon l'une quelconque des revendications précédentes, **caractérisée en ce qu'**il est prévu au moins une installation photovoltaïque et/ou au moins une installation éolienne, pourvue d'au moins un accumulateur d'énergie électrique qui est susceptible d'être couplé au moins temporairement avec la centrale électrique (100) ou qui est prévu en étant intégré au moins temporairement avec la centrale électrique (100).

8. Ensemble de centrales électriques, pourvu d'une pluralité de centrales électriques (100, 1100), destiné à mettre à disposition au moins de la puissance de réglage pour un réseau d'alimentation et/ou de la puissance pour l'alimentation électrique de consommateurs (10) au sein d'un réseau d'alimentation (200),
au moins une centrale électrique (100) selon l'une quelconque des revendications précédentes étant prévue, laquelle comporte une première partie (110) de centrale électrique et une deuxième partie (120) de centrale électrique,
une composante de sortie (130) côté centrale électrique de l'au moins une centrale électrique (100) étant placée entre le réseau d'alimentation (200) et les deux parties (110, 120) de centrale électrique de ladite centrale électrique (100) et les deux parties (110, 120) de centrale électrique étant couplées l'une avec l'autre côté centrale électrique de telle sorte que leur puissance totale soit alimentée côté centrale électrique à la composante de sortie (130) et que la composante de sortie (130) distribue la puissance de la centrale électrique (100) au réseau d'alimentation (200),
au moins une centrale électrique (1100) supplémentaire étant couplée au moins temporairement avec la deuxième partie (120) de centrale électrique et la centrale électrique (1100) supplémentaire et la deuxième partie (120) de centrale électrique étant susceptibles d'être couplées l'une avec l'autre, temporairement de manière séparée de la première partie (110) de centrale électrique de telle sorte que leur puissance totale soit alimentée côté centrale électrique à la composante de sortie de la centrale électrique (1100) supplémentaire et que la composante de sortie de la centrale électrique (1100) supplémentaire distribue au réseau d'alimentation (200) la puissance de la centrale électrique (1100) supplémentaire et de la deuxième partie (120) de centrale électrique,
par l'intégration de la deuxième partie (120) de centrale électrique, une mise à disposition rapide de puissance de réglage de la centrale électrique (1100) supplémentaire ayant lieu.

9. Ensemble de centrales électriques selon la revendication 8, plusieurs deuxièmes parties (120) de centrales électriques étant prévues pour le couplage temporaire avec différentes centrales électriques (100).

10. Ensemble de centrales électriques selon l'une quelconque des revendications 8 ou 9, au moins une installation photovoltaïque et/ou au moins une installation éolienne pourvue d'au moins un accumulateur d'énergie électrique qui est susceptible d'être couplé au moins temporairement avec au moins une centrale électrique (100) ou qui est intégré au moins temporairement avec au moins une centrale électrique (100) étant prévue.

11. Procédé destiné à faire fonctionner une centrale électrique (100) destinée à mettre à disposition au moins de la puissance de réglage pour un réseau d'alimentation (200) et/ou de la puissance pour l'alimentation électrique de consommateurs (10) au sein d'un réseau d'alimentation (200) sur une composante de sortie (130) côté centrale électrique et pourvue d'une première partie (110) de centrale électrique et d'une deuxième partie (120) de centrale électrique,
la première partie (110) de centrale électrique comprenant une partie génératrice d'électricité (102), une partie technique de gestion (104), ainsi qu'une partie de commande (106) activable par la partie technique de gestion (104), pour obtenir de la puissance électrique à partir de la partie génératrice d'électricité (102) et étant une centrale électrique conventionnelle, comme une centrale au charbon, une centrale hydraulique, une centrale de pompage-turbinage, une centrale gaz et vapeur ou similaire,
la deuxième partie (120) de centrale électrique étant conçue sous la forme d'un groupe accumulateur d'énergie électrique et comprenant un ou plusieurs accumulateurs d'énergie électrique (122) destinés à distribuer ou à recevoir de l'énergie électrique et au moins temporairement une partie technique de gestion (104) et étant activée par celle-ci,
les première et deuxième parties (110, 120) de central électrique formant un groupe en rapport à la puissance de réglage de l'au moins une centrale électrique (100) et la composante de sortie (130) côté centrale électrique étant électriquement connectée entre le réseau d'alimentation (200) et les deux parties (110, 120) de centrale électrique et les deux parties (110, 120) de centrale électrique étant couplées côté centrale électrique l'une à l'autre de telle sorte que leur puissance totale soit alimentée côté centrale électrique à la composante de sortie (130) et la composante de sortie (130) distribue la puissance de la centrale électrique (100) au réseau d'alimentation (200),
en cas de besoin de puissance de réglage au sein du réseau d'alimentation (200), la deuxième partie (120) de centrale électrique mettant à disposition sur une période prédéfinie, par l'intermédiaire de la composante de sortie (130) côté centrale électrique au moins une partie de la puissance nécessaire, alors qu'on adapte la puissance de la première partie (110) de centrale électrique à la puissance de réglage exigée, par intégration de la deuxième partie (120) de centrale électrique, une mise à disposition rapide de puissance de réglage ayant lieu.

12. Procédé destiné à faire fonctionner un ensemble de centrales électriques, pourvu d'une pluralité de centrales électriques (100, 1100) lesquelles mettent à disposition au moins de la puissance de réglage pour un réseau d'alimentation (200) et/ou de la puissance pour l'alimentation électrique de consommateurs (10) au sein d'un réseau d'alimentation (200), au moins une centrale électrique (100) étant conçue selon l'une quelconque des revendications 1 à 7, laquelle comporte une première partie (110) de centrale électrique et une deuxième partie (120) de centrale électrique, qui, par rapport à la puissance de réglage de l'au moins une centrale électrique (100), forment une unité et
une composante de sortie (130) côté centrale électrique de l'au moins une centrale électrique (100) étant placée entre le réseau (200) et les deux parties (110, 120) de ladite centrale électrique (100) et les deux parties (110, 120) de centrale électrique étant couplées côté central électrique l'une à l'autre de telle sorte que leur puissance totale soit alimentée côté centrale électrique à la composante de sortie (130) et la composante de sortie (130) distribue la puissance de la centrale électrique (100) au réseau d'alimentation (200),
une centrale électrique (1100) supplémentaire étant couplée au moins temporairement avec la deuxième partie (120) de centrale électrique de ladite centrale électrique (100), et en cas de besoin de puissance de réglage au sein du réseau (200), mettant à disposition sur une période prédéfinie au moins une partie de la puissance nécessaire, alors qu'on adapte la puissance de la centrale électrique (1100) supplémentaire à la puissance de réglage exigée et la centrale électrique (1100) supplémentaire et la deuxième partie (120) de centrale électrique étant temporairement susceptibles d'être couplées l'une à l'autre séparément de la première partie (110) de centrale électrique, de telle sorte que leur puissance totale soit alimentée côté centrale électrique à la composante de sortie de la centrale électrique (1100) supplémentaire et que la composante de sortie de la centrale électrique (1100) supplémentaire distribue au réseau d'alimentation (200) la puissance de la centrale électrique (1100) supplémentaire et de la deuxième partie (120) de centrale électrique,
par intégration de la deuxième partie (120) de centrale électrique, une mise à disposition rapide de puissance de réglage de la centrale électrique (1100) supplémentaire ayant lieu.

13. Procédé selon la revendication 11 ou 12, la partie technique de gestion (104) délivrant de manière correspondantse avec la puissance électrique fournie ou absorbée par la deuxième partie (120) de centrale électrique des instructions de commande à des grandeurs de réglage de la première partie (110) de centrale électrique et/ou de la centrale électrique (1100) supplémentaire, pour augmenter ou diminuer sa puissance.

14. Procédé selon l'une quelconque des revendications 11 à 13, la puissance de la deuxième partie (120) de centrale électrique étant adaptée en fonction de la puissance de réglage actuellement nécessaire et de la puissance actuellement disponible de la première partie (110) de centrale et/ou de la centrale électrique (1100) supplémentaire.

15. Procédé selon l'une quelconque des revendications 11 à 14, en cas d'exigence de puissance de réglage positive, la deuxième partie (120) de centrale électrique distribuant de la puissance au réseau d'alimentation (200) et en cas d'exigence de puissance de réglage négative, la deuxième partie (120) de centrale électrique absorbant de la puissance à partir du réseau d'alimentation (200).
